# EUROPEAN PATENT APPLICATION

(11) **EP 2 708 738 A1**
(43) Date of publication of application: **19.03.2014**
(21) Application number: 12382347.8
(22) Date of filing: 12.09.2012
(51) Int. Cl.: F03D 7/02, F03D 11/00

(54) **Wind turbine**

(71) Applicant: Alstom Wind, S.L.U., 08005 Barcelona (ES)
(72) Inventor: Canedo Pardo, Santiago, 08022 Barcelona (ES)
(74) Representative: ZBM Patents - Zea, Barlocci & Markvardsen

(57) **Abstract**

Wind turbine having a yaw system that comprises an annular gear, a plurality of motors, and a gear system having a gearbox and a pinion for each of the motors. Each of the gear systems is arranged to transmit a torque from the related motor to the annular gear. Moreover, at least one of the gear systems comprises a rotatable component having a frangible joint between a first part and a second part of the gear system. This joint is adapted to be broken once, during operation, the first part receives a torque from the annular gear that is greater by a predetermined amount than a torque received from the second part, said breaking of the joint causing the first part to be dragged by the annular gear independently from the second part.

## Description

The present invention relates to a wind turbine having a yaw system that comprises an annular gear, a plurality of motors, and a gear system having a gearbox and a pinion for each of the motors.

### BACKGROUND ART

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft, either directly or through the use of a gearbox, to a generator. This way, the generator produces electricity which is supplied into the electrical grid.

Most wind turbines comprise a yaw system used for orienting the rotor of the wind turbine in the prevailing wind direction. Normally, when the rotor is aligned to the wind direction, the yaw system maintains the position by means of brakes (e.g. hydraulic brake callipers and/or electro-brakes). When the rotor is misaligned from the wind direction the yaw system rotates the nacelle to reach an appropriate alignment with the wind.

The yaw system normally performs this rotation of the nacelle by means of a plurality of (electric or hydraulic) motors with suitable gearboxes for driving gears (pinions) that mesh with an annular gear attached to the nacelle or to the wind turbine tower. The nacelle can thus be rotated around the tower's longitudinal axis in or out of the wind direction. An aspect of providing a plurality of yaw motors is that the local wear on the annular gear may be reduced. Furthermore, when a plurality of motors is used, the motors may be less powerful than if a single motor were used. A further advantage is that redundancy may be also provided, so that even if one or more yaw motors fail, the wind turbine can still be operated.

The number of yaw motors acting on the annular gear (through the corresponding gears) may be increased in the wind turbines with higher rated power. The aerodynamic loads will be higher and sharing the load by an increased number of motors (and related gears) may allow reducing the height of the annular gear. Consequently, a higher efficiency in terms of costs may be achieved.

However, if any of the gearbox-motor units becomes blocked, the whole yaw system may become blocked too, so the whole wind turbine has to be shut down until substitution of the gearbox-motor unit. This can lead to very high losses of power generation especially in offshore wind turbines. This situation may be considered as a critical failure mode in a specific FMECA (Failure mode, effects and criticality analysis). Furthermore, if the blocking of the gearbox produces a severe damage on the annular gear, a total disassembly of the nacelle for reparation in land will be probably required. This situation may be considered as a catastrophic failure mode in a specific FMECA.

Known approaches to deal with this problem are based on designing more secure gearbox-motor units and/or a robust annular gear from the mechanical point of view. However, this approach may increase weight and costs. An alternative approach may be to implement a fine control of the electric system capable of detecting a malfunction in any of the gearboxes. This way, when a malfunction is detected, the operation of the yaw system can be interrupted to avoid a major problem on the annular gear. However, the malfunction of a gearbox-motor unit can occur very fast, and also the aerodynamic torque peaks may be variable. Thus, in some situations, it may not be easy for the control system to distinguish an acceptable overload from a real problem of the yaw system. The yaw system could thus be improperly stopped if the control system interprets an overload due to aerodynamic reasons as a malfunction of the yaw system.

Furthermore, even if the control system were able to unambiguously detect a real malfunction of the yaw system in time and to accordingly interrupt the operation of the yaw system, the wind turbine would remain unavailable until the substitution of the corresponding faulty gearbox-motor unit. This unavailability of the wind turbine may cause significant losses in terms of power generation, especially in offshore wind turbines.

### SUMMARY OF THE INVENTION

There still exists a need for new wind turbines having a yaw system that at least partially resolves some of the above mentioned problems. It is an object of the present invention to fulfil such a need.

In a first aspect, the present invention provides a wind turbine having a yaw system that comprises an annular gear, a plurality of motors, and a gear system having a gearbox and a pinion for each of the motors. Each of the gear systems is arranged to transmit a torque from the related motor to the annular gear. Moreover, at least one of the gear systems comprises a rotatable component having a frangible joint between a first part and a second part of the gear system. This joint is adapted to be broken once, during operation, the first part receives a torque from the annular gear that is greater by a predetermined amount than a torque received from the second part, said breaking of the joint causing the first part to be dragged by the annular gear independently from the second part.

This wind turbine and, particularly, its multi-motor yaw system are based on the idea of that, during operation, a gear system (and its related motor) may become completely or partially blocked while other gear systems are not blocked. These other gear systems thus transmitting a corresponding torque from their related motors to the annular gear. This situation may cause the blocked gear system to receive from the annular gear a torque significantly greater than the torque coming from its related motor. A frangible joint suitably designed for this blocked gear system may cause a first part and a second part of the gear system to become independently rotatable from each other as a result of said significant difference of torques. For example, this frangible joint may be designed taking into account the particular features (materials, dimensions, etc.) of the gear system such that it breaks when the difference of torques exceeds a predetermined amount. Then, once this joint has been broken, the first part of the gear system may be dragged by the annular gear separately from the second part of the gear system. In other words, the gear system may rotate dependently of the annular gear (and its related torque) and independently from the second part of the gear system (according to the torque coming from the related motor).

The proposed wind turbine and related yaw system may have several advantages with respect to the known prior art. One of them may be that the proposed solution is cheaper than other known techniques, since neither mechanical reinforcements nor particular fine control systems are necessary. Instead, a gear system is designed with just a mechanical frangible joint that breaks when a high difference of torques (one from the annular gear and another from the corresponding motor) occurs.

Another advantage may be that, if a significant number of gear systems of the yaw system are still operative, the yaw system can continue its operation although one of the gear systems has become inoperative and its joint has been broken. This means that the wind turbine can continue generating power while its yaw system has a faulty gear system. This advantage is especially important for offshore wind turbines, as the repair of this type of turbines may require some time to be initiated and may be particularly expensive due to their location in the sea.

A further advantage may be that important damages in the annular gear may be avoided, since the blocked gear system becomes unblocked substantially instantly when the torque from the annular gear exceeds the torque coming from the related motor by the corresponding predefined amount.

The frangible joint of the gear system may be comprised in any of the rotatable components of the gear system. This rotatable component may be a gear of the gear system. Particularly, this gear with frangible joint may be the pinion of the gear system or, alternatively, a gear comprised in the gearbox of the gear system. In alternative embodiments, the rotatable component having the frangible joint may be a shaft of the gear system. In particular, this shaft may be a shaft between the gearbox and the pinion of the gear system or, alternatively, a shaft comprised in the gearbox of the gear system.

In general, the frangible joint may be comprised in any of the components of the gear system which permits the gear system to be "split" into a first part and a second part once, during operation, the first part receives a torque from the annular gear that is greater by a predetermined amount than a torque received from the second part, said "split" causing the first part to be dragged by the annular gear independently from the second part.

In some embodiments, the frangible joint may be a reduction of a local radial width of the corresponding rotatable component (such as e.g. a pinion or a shaft of the corresponding gear system). The reduction of local radial width may be such that, depending on the materials, dimensions, etc. of the rotatable component, this reduction constitutes a weak point that breaks when the torque from the annular gear exceeds the torque coming from the related motor by the predetermined amount. In the case of a gear with teeth, this reduction may be applied to a region of said gear without teeth if such a region exists.

When such a corresponding rotatable component breaks, a piece may fall and cause additional damages in the gear system. Thus, a piece acting as a stopper may be used to avoid these possible falls. This stopper may be placed immediately below the piece susceptible of falling. For example, if the piece susceptible of falling is part of a gear, a shaft region immediately below this gear may be provided with a clamp type piece to stop a possible fall of said part of the gear.

The reduction of a local radial width of the rotatable component may be formed by machining or, alternatively, moulding of the rotatable component. In fact, an existing gear or shaft may be suitably machined for implementing said reduction in said gear or shaft. Alternatively, a gear or shaft may be directly constructed considering the predetermined reduction of its local radial width by using a suitable mould.

Alternatively to the abovementioned reduction of a local radial width of the rotatable component, the frangible joint may be a pressured interface between respective surfaces of a first piece and a second piece of the rotatable component. Said first piece may be comprised in the (frangible) first part of the gear system having the rotatable component and said second piece may be comprised in the (frangible) second part of the same gear system. And said pressured interface may be adapted to cause the rotatable component to rotate together until, during operation, the first part receives a torque from the annular gear that is greater than a torque received from the second part by a predetermined amount. In this situation, thus, the first piece becomes rotatable about the second piece.

An aspect of these alternative embodiments may be that the rotatable component is not designed to be broken, but a controlled sliding between the corresponding surfaces of the first and the second piece of this component is caused when the difference of torques exceeds the predetermined amount.

The pressured interface may be achieved e.g. by using "hot expanding" techniques, which are based on heating a first element to expand it and fitting a second element into said heated element taking advantage of its expansion. This way, when the first element is cooled and consequently contracted, a pressured interface between the first element and the second element is achieved. Alternatively, cooling may be used to contract one element before its insertion in another. Yet another possibility is to do this mechanically.

The parameters to be applied for achieving the pressured interface may depend on the physical configuration (materials, dimensions, etc.) of the rotatable element to be provided with said pressured interface, on the difference of torques at which the pressured interface is desired to be released, etc.

According to embodiments of the invention, the (releasable) first piece of the rotatable component has a male portion with cylindrical shape and the (releasable) second piece of the rotatable component has a female portion with annular shape. In these embodiments, the male portion may be press-fitted into the female portion, such that the interface between the male cylindrical surface and the female annular surface may constitute the abovementioned pressured interface between the respective surfaces of the first piece and the second piece of the rotatable component.

Both the first and the second pieces may be designed and constructed to remain at a fixed height in the gear system, that is to say, neither the first nor the second piece are expected to fall once the pressured interface has been released. However, a stopper piece may be placed immediately below the rotatable component to avoid damages in case of unexpected fall of some of the parts of the rotatable element. The same principles explained with respect to the stopper for the embodiments based on a breakable rotatable component may be applied to these alternative cases.

Alternatively to the abovementioned shapes, the corresponding male and female portions may have any other shape suitable for achieving the controlled sliding when the difference of torques reaches a predetermined magnitude. For example, slightly conical shapes may be quite appropriate. In an exemplary male-female configuration, the male portion may have a slightly conical shape such that its region with larger radial width (i.e. the larger base of the cone) is provided internally of the female portion. In this exemplary configuration, a stopper piece external to the rotatable component may not be necessary, since the region with larger radial width act as a stopper.

According to embodiments, the respective surfaces of the (releasable) first piece and the (releasable) second piece of the rotatable component may be rough surfaces. This roughness may contribute to increase the friction between said respective surfaces, so the necessary pressure between them may be less than the pressure required without said roughness. Therefore, the process of constructing the pressured interface may be less complex and thus less expensive with such a roughness.

### BRIEF DESCRIPTION OF THE DRAWINGS

Particular embodiments of the present invention will be described in the following by way of non-limiting examples, with reference to the appended drawings, in which:
Figure 1 schematically illustrates a perspective view of a configuration of an annular gear and several motors and gear systems suitable for embodiments of the invention;
Figure 2a schematically represents a perspective view of a conventional motor and gear system unit suitable for embodiments of the invention;
Figure 2b schematically represents a lateral view of the conventional motor and gear system unit of Figure 2a;
Figure 3a is a schematic representation of a lateral view of a conventional pinion susceptible to be adapted for use in embodiments of the invention;
Figure 3b is a schematic representation of a lateral view of the conventional pinion of Figure 3a adapted for use in embodiments of the invention;
Figure 3c is a schematic representation of an exploded view of a region of the adapted pinion shown in Figure 3b;
Figure 4a is a schematic representation of a perspective view of an alternative pinion for use in embodiments of the invention;
Figure 4b is a schematic illustration of a lateral view of the disassembled pinion of Figure 4a;
Figure 5a schematically illustrates a lateral view of the pinion of Figures 4a and 4b but shown assembled;
Figure 5b is a schematic illustration of a view of the pinion of Figure 5a from a particular point of vision shown in Figure 5a; and
Figure 5c schematically illustrates a sectional view of the pinion of Figures 5a and 5b according to a plane A-A indicated in Figure 5b.

### DETAILED DESCRIPTION OF EMBODIMENTS OF THE INVENTION

In the following description, numerous specific details are set forth in order to provide a thorough understanding of the present invention. It will be understood by one skilled in the art however, that the present invention may be practiced without some or all of these specific details. In other instances, well known elements have not been described in detail in order not to unnecessarily obscure the description of the present invention.

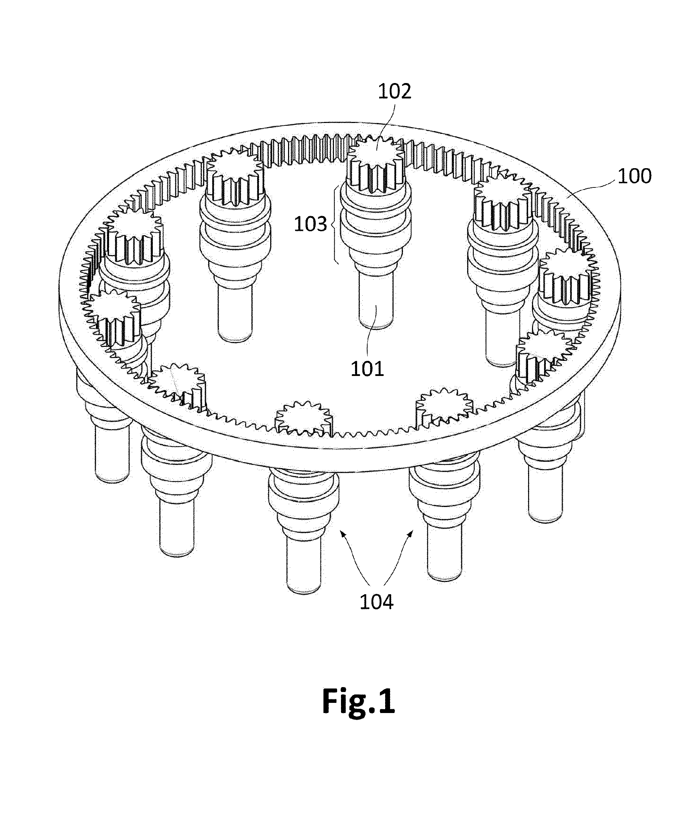

Figure 1 schematically illustrates a perspective view of a configuration of an annular gear and several motors and gear systems suitable for embodiments of the invention. In particular, this figure shows an annular gear 100 and ten motor and gear system structures 104, each of said structures 104 having a motor 101, a gearbox 103 and a pinion 102. Each of the pinions 102 is shown meshed with the annular gear 100 such that each of the ten gear systems 103, 102 can transmit a torque from its related motor 101 to the annular gear 100. The shown configuration can be comprised in a yaw system of a wind turbine in such a way that the annular gear 100 can be attached to the nacelle or to tower of the wind turbine. The nacelle can thus be rotated around the tower's longitudinal axis in or out of the wind direction by the ten motor and gear system structures 104 acting together on the annular gear 100.

Any of the motor and gear system structures 104 can become suddenly blocked, which may be caused e.g. by an accidental detachment of a piece of the motor and gear system structure 104 itself (such as e.g. a screw or similar). This situation may cause the blocked gear system 103, 102 to receive from the annular gear 100 a torque significantly greater than the torque coming from its related motor 101. The blocked gear system 103, 102 may comprise a frangible joint (not shown) causing a first part and a second part of the blocked gear system 103, 102 to become independently rotatable from each other as a result of said significant difference of torques. This way, the yaw system can continue its operation even having a faulty motor and gear system structure 104. This proposed approach has different advantages, which have been previously commented.

As any of the motor and gear system structures 104 can be blocked, any of the gear systems 103, 102 may comprise a frangible joint of the type explained before. Details about how this frangible joint may be designed and constructed will be provided in later descriptions with reference to other figures and related examples.

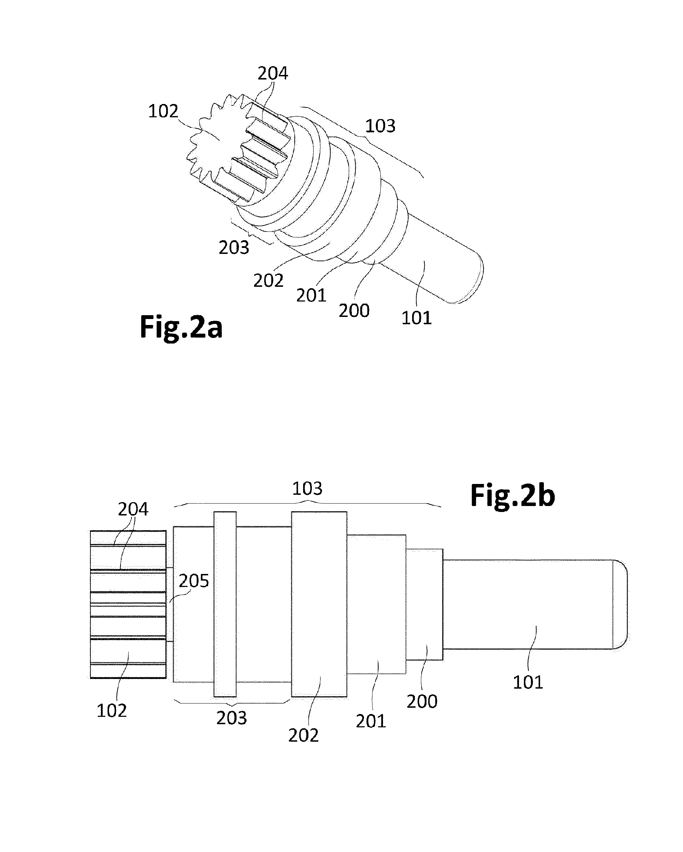

Figure 2a schematically represents a perspective view of a conventional motor and gear system unit suitable for embodiments of the invention. This exemplary configuration comprises a motor 101, a gearbox 103 and a pinion 102. The gearbox 103 may comprise three planetary stages 200, 201 and 202 to reduce the rotational speed from the motor 101 and, at the same time, increase the torque generated by the motor 101. The gearbox 103 may also comprise a female coupling 203 for receiving and meshing with a male coupling (not shown) of the pinion 102. The pinion 102 is shown comprising teeth 204 for meshing with a corresponding annular gear. The gear system of Figure 2a may comprise a frangible joint of the type explained with reference to Figure 1.

This frangible joint may be comprised in any suitable of the shown parts of the gear system. For example, the frangible joint may be comprised in a gear or shaft of any of the planetary stages 200, 201 and 201 of the gearbox 103. Another possibility could be the frangible joint to be comprised in the pinion 102 (e.g. in a region free of teeth). Alternatively, the frangible joint could be comprised in a shaft connecting the gearbox 103 and the pinion 102. Etc.

Figure 2b schematically represents a lateral view of the conventional motor and gear system unit of Figure 2a. In this case, only a male part 205 of the pinion 102 is shown additionally with respect to the elements shown in Figure 2a. This male part 205 is shown introduced in the female part 203 of the gearbox 103 in such a way that the pinion 102 can suitably receive the torque produced by the highest planetary stage 202 of the gearbox 103.

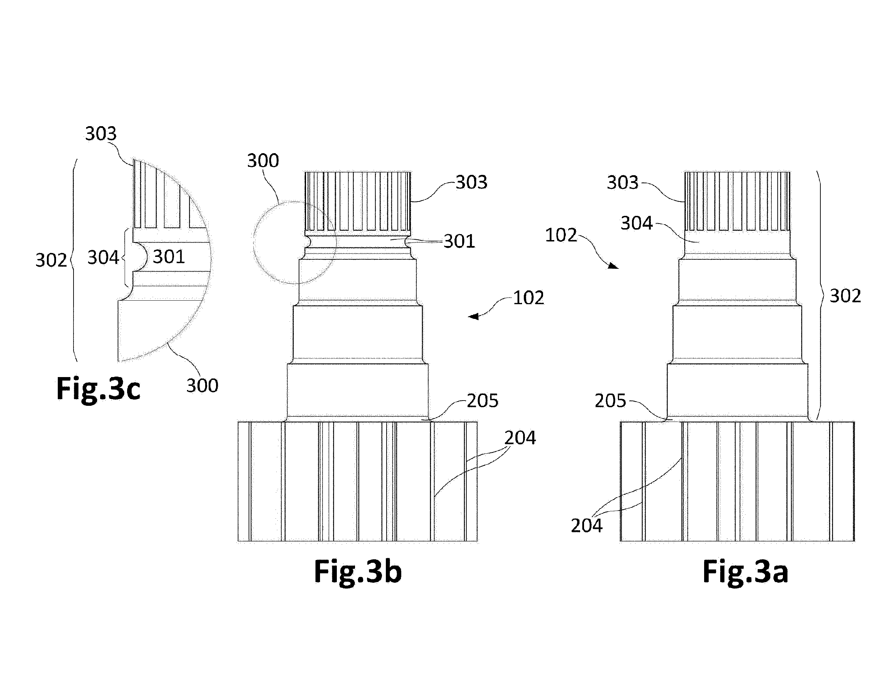

Figure 3a is a schematic representation of a lateral view of a conventional pinion susceptible to be adapted for use in embodiments of the invention. In this case, an entire male portion 302 of the pinion 102 is shown. This male portion 302 comprises the part 205 shown in Figure 2b and other parts. This pinion 102 comprises, at one end, teeth 204 for meshing with an annular gear and, at the opposite end, teeth 303 for meshing with a female connection of a gearbox. Just below the teeth 303 for meshing with a gearbox there is a region without teeth 304 which has the lowest radial width along the male portion 302. This region 304, thus, could be considered the preferred region to include a weak point adapted to break if a great difference between the torque from the annular gear and the torque from the gearbox is produced. In this example, the male portion 302 has been considered a part of the pinion 102, but, in alternative conceptions, the pinion may be considered to be only the part with teeth 204 for meshing with the annular gear, while the male portion 302 may be considered a shaft for connecting the pinion with the gearbox.

Figure 3b is a schematic representation of a lateral view of the conventional pinion of Figure 3a adapted for use in embodiments of the invention. Particularly, Figure 3b illustrates a reduction 301 of a local radial width in the region 304 just below the teeth 303 for meshing with the gearbox. In this case, a "toroidal" reduction 301 is proposed but, of course, the reduction may have any other shape whenever the reduction 301 is sufficient to achieve the expected effect. The magnitude of this reduction 301 may depend on the physical configuration (materials, dimensions, etc.) of the whole pinion 102 and of the region 304 whose width is to be reduced, on the difference of torques at which the weak point is desired to break, etc. Known modelling tools can be used and experimental tests can be performed to determine the magnitude of the reduction 301. The reduction of width could be applied to any other region without teeth of the male portion 302, but the selected region 304 is considered to be the most appropriate region because of its lowest radial width. In other designs of the male portion 302 having other regions with lowest width, the reduction 301 could be applied to any of said other regions with lowest width. As commented before, the male portion 302 may be considered a shaft instead of a part of the pinion, in which case all the principles explained in this paragraph are equally valid.

For a better understanding, Figure 3c shows a schematic representation of an exploded view of a region of the adapted pinion of Figure 3b. Since Figure 3c does not show either additional elements or further principles with respect to Figure 3b, and it is self-explanatory enough, no further descriptions about Figure 3c will be provided.

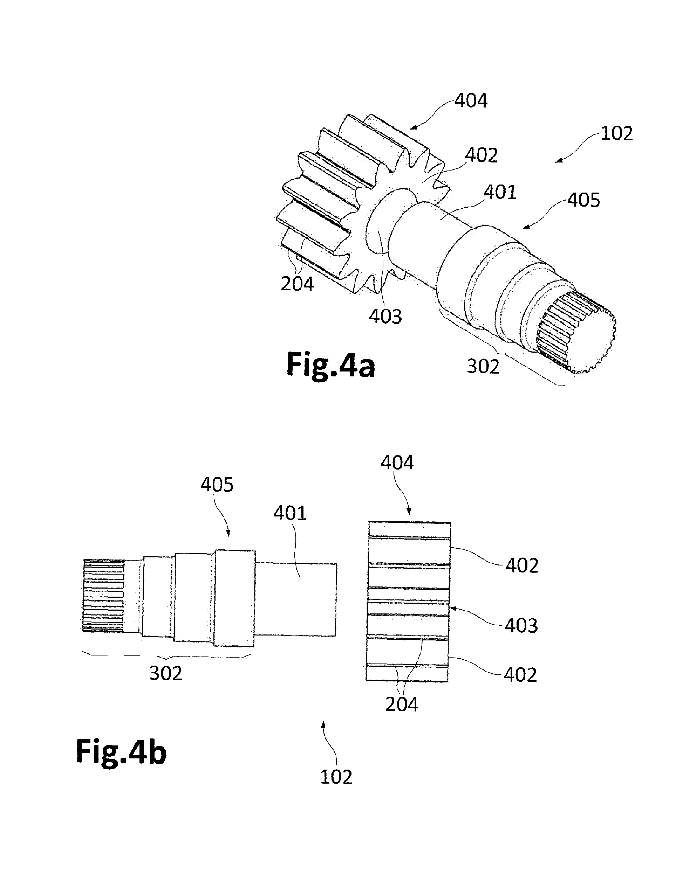

Figure 4a is a schematic representation of a perspective view of an alternative pinion for use in embodiments of the invention. This alternative pinion is similar to the one illustrated by Figure 3a but differently adapted in comparison with Figure 3b. In this case, the pinion 102 comprises a first piece 405 having a male portion with cylindrical shape 401 and a second piece 404 having a female portion with annular shape 403. The second piece 404 has a solid region 402 comprising the teeth 204 for meshing with the annular gear, and a hollow region 403 which corresponds to the female portion 403.

Figure 4a shows the two pieces 404, 405 of the pinion 102 disassembled. The male portion 401 and the female portion 403 may be adapted such that the male portion 401 can be press-fitted into the female portion 403. This press-fitting may be performed by using "hot expanding" techniques. In this case, the cylindrical shape of the male portion 401 may have a size greater than the size of the hole 403 of the female portion, and the solid part 402 of the second piece 404 may be heated to expand it and to make the hole 403 larger in such a way that the male portion 401 can be fitted into the female portion 403. When the solid part 402 of the second piece 404 is cooled and consequently contracted, a pressured interface between the male portion 401 and the female portion 403 is achieved.

Figure 4b is a schematic illustration of a lateral view of the disassembled pinion of Figure 4a.

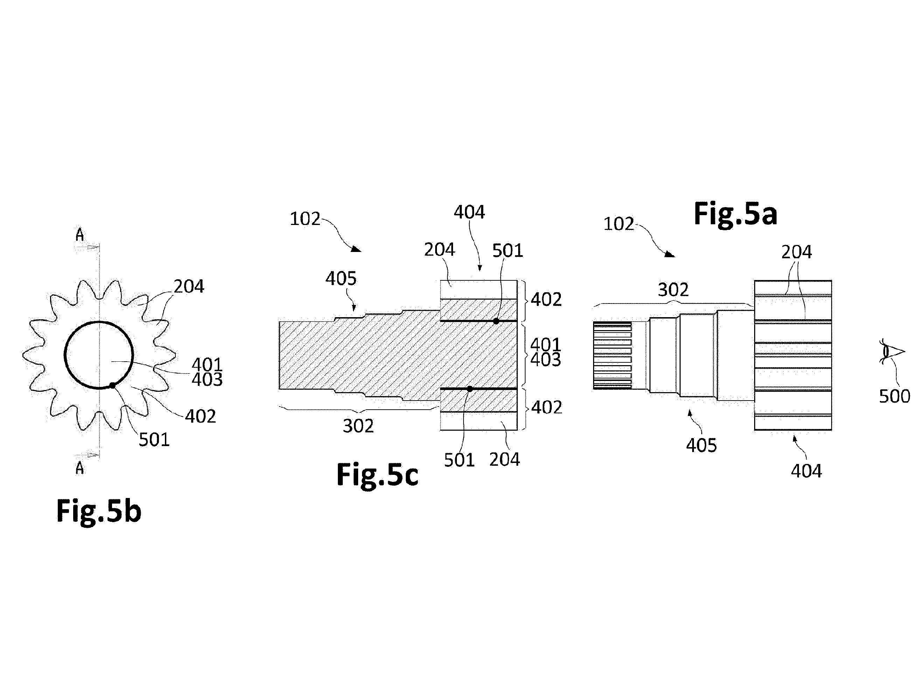

Figure 5a schematically illustrates a lateral view of the pinion of Figures 4a and 4b but, in this case, showing the two parts 404, 405 of the pinion 102 assembled. No details about the pressured interface between the male portion 401 and the female portion 403 are shown in this figure. Figure 5b is a schematic illustration of a view of the pinion of Figure 5a from a particular point of vision 500 shown in Figure 5a. In this last figure, part of the pressured interface 501 between the male portion 401 and the female portion 403 is shown.

Figure 5c schematically illustrates a sectional view of the pinion of Figures 5a and 5b according to a particular plane A-A indicated in Figure 5b. In this figure, another view of the pressured interface 501 is provided. This pressured interface can be designed such that it may cause the first and second part 404, 405 of the pinion 102 to rotate together until, during operation, a significant difference of torques (a first one from the annular gear and a second one from the related motor) is produced. The pressured interface may be configured such that when said difference of torques exceeds a predefined amount, the first and second pieces 404, 405 become independently rotatable from each other.

Physical features of the two parts 404, 405 of the pinion 102, the amount by which the torque received from the annular gear can be greater than the torque coming from the corresponding motor, etc. may be taken into account to achieve the pressured interface. All these parameters can be modelled in a known computer based tool to design the pinion 102 and related pieces, as well as to define the procedure of press-fitting the male portion 401 into the female portion 403. Once modelled and designed, the pinion 102 can be constructed by applying known techniques and experimentally tested.

In embodiments of the invention, the surface of the male portion 401 and the surface of the female portion 403 to be in "pressured" contact with each other may be rough surfaces, such that a higher friction between them may be caused. This roughness may help to require a lower pressure between the male portion 401 and the female portion 403. This lower pressure may make the process of press-fitting the male portion 401 into the female portion 403 significantly cheaper.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A wind turbine having a yaw system that comprises an annular gear, a plurality of motors, and a gear system having a gearbox and a pinion for each of the motors;
wherein each gear system is arranged to transmit a torque from the related motor to the annular gear; and
wherein at least one of the gear systems comprises a rotatable component having a frangible joint between a first part and a second part of the gear system, said joint being adapted to be broken once, during operation, the first part receives a torque from the annular gear that is greater by a predetermined amount than a torque received from the second part, said breaking of the joint causing the first part to be dragged by the annular gear independently from the second part.

2. A wind turbine according to claim 1, wherein the frangible joint is a reduction of a local radial width of the rotatable component.

3. A wind turbine according to claim 2, wherein the reduction of the local radial width is formed by machining of the rotatable component.

4. A wind turbine according to claim 2, wherein the reduction of the local radial width is formed by moulding of the rotatable component.

5. A wind turbine according to claim 1, wherein the frangible joint is a pressured interface between respective surfaces of a first piece and a second piece of the rotatable component;
wherein said first piece is comprised in the first part of the gear system having the rotatable component and said second piece is comprised in the second part of the same gear system; and
wherein said pressured interface causes the rotatable component to rotate together until, during operation, the first part receives a torque from the annular gear that is greater by a predetermined amount than a torque received from the second part, in which case the first piece becomes rotatable about the second piece.

6. A wind turbine according to claim 5, wherein the first piece of the rotatable component has a male portion with cylindrical shape and the second piece of the rotatable component has a female portion with annular shape;
wherein the male portion is press-fitted into the female portion; and wherein the pressured interface between the respective surfaces of the first piece and the second piece of the rotatable component is the interface between the male cylindrical surface and the female annular surface.

7. A wind turbine according to any of claims 5 or 6, wherein the respective surfaces of the first piece and the second piece of the rotatable component are rough surfaces.

8. A wind turbine according to any of claims 1 to 7, wherein the rotatable component having the frangible joint is a gear of the corresponding gear system.

9. A wind turbine according to claim 8, wherein the gear having the frangible joint is the pinion of the corresponding of the gear system.

10. A wind turbine according to claim 8, wherein the gear having the frangible joint is a gear of the gearbox of the corresponding gear system.

11. A wind turbine according to any of claims 1 to 7, wherein the rotatable component having the frangible joint is a shaft of the corresponding gear system.

12. A wind turbine according to claim 11, wherein the shaft having the frangible joint is a shaft between the gearbox and the pinion of the corresponding gear system.

13. A wind turbine according to claim 11, wherein the shaft having the frangible joint is a shaft of the gearbox of the corresponding gear system.
